# FASCICULE DE BREVET EUROPEEN

(11) **EP 1 738 952 B1**
(45) Date de publication et mention de la délivrance du brevet: **26.03.2008**
(21) Numéro de dépôt: 06290805.8
(22) Date de dépôt: 17.05.2006
(51) Int. Cl.: B60N 2/06, B60N 2/44, B60N 2/01

(54) **Véhicule comprenant une banquette mobile et des éléments latéraux montés en rotation sur ladite banquette**
Fahrzeug mit einer verschiebbaren Sitzbank und auf dieser Sitzbank schwenkbar montierten Seitenelementen
Vehicle with a movable seat bench and lateral elements pivotaly mounted onto that seat bench

(30) Priorité: 27.06.2005 FR 0551782
(43) Date de publication de la demande: 03.01.2007
(73) Titulaire: Heuliez, 79140 Cerizay (FR)
(72) Inventeur: Queveau, Paul, 79140 Montravers (FR); Leclerre, Frédéric, 91300 Massy (FR)
(74) Mandataire: Bredema

(56) Documents cités:
- DE-A1- 10 345 834
- FR-A- 2 828 147
- PATENT ABSTRACTS OF JAPAN vol. 2003, no. 12, 5 décembre 2003 (2003-12-05) -& JP 2003 335155 A (DELTA KOGYO CO LTD), 25 novembre 2003 (2003-11-25)
- PATENT ABSTRACTS OF JAPAN vol. 1999, no. 09, 30 juillet 1999 (1999-07-30) -& JP 11 115563 A (NISSAN MOTOR CO LTD), 27 avril 1999 (1999-04-27)

## Description

L'invention concerne un véhicule automobile comprenant une banquette arrière mobile entre une position avancée et une position reculée.

Dans l'art antérieur, il est connu des banquettes de véhicule mobile entre une position reculée et une position avancée. Ainsi, l'habitacle du véhicule est modulable. Dans une position reculée, l'espace situé devant la banquette est augmenté de façon à accroître le confort des passagers et dans une position avancée, l'espace situé derrière la banquette, le coffre par exemple, est augmenté.

Cependant, la largeur des banquettes divulguées dans l'art antérieur n'est pas modulable. Lorsque la banquette est dans sa position reculée, la largeur de la banquette est restreinte en raison du passage des roues qui empiète sur la largeur de l'habitacle. Ainsi, lorsque la banquette est dans sa position avancée, la banquette n'occupe pas toute la largeur de l'habitacle et l'occupation de l'habitacle n'est pas optimisée. Par conséquent, la banquette ne permet de recevoir que deux passagers dans sa configuration reculée comme dans sa position avancée.

Le document JP2003 335155 décrit une banquette composée d'une assise 3A et d'un dossier 3B mobile entre une position avancée et une position reculée. Un élément latéral 3D est mobile entre une position relevée et une position couchée. L'élément latéral 3D est monté en rotation autour d'un axe transversal au véhicule et contraint dans sa position couchée au moyen de ressorts 16b. Lors du mouvement de la banquette 3 de sa position avancée vers sa position reculée, le contact entre le passage des roues et l'élément latéral provoque le mouvement de élément latéral vers sa position relevée. Toutefois, ce document ne décrit pas un élément latéral monté en rotation autour d'un axe longitudinal au véhicule.

L'invention vise à remédier à ces problèmes en proposant un véhicule automobile possédant une banquette mobile entre une position avancée et une position reculée, de structure simple, le véhicule étant agencée pour permettre d'augmenter la largeur d'assise disponible lorsque la banquette est dans sa position avancée.

A cet effet, et selon un premier aspect, l'invention propose un véhicule automobile comprenant :
- une banquette composée d'une assise et d'un dossier, ladite banquette étant mobile selon l'axe longitudinal du véhicule entre une position avancée et une position reculée ; et
- au moins un élément latéral monté en rotation sur l'assise, selon un axe sensiblement parallèle à l'axe longitudinal du véhicule, à proximité d'un des bords de l'assise et mobile entre une position relevée dans lequel il est sensiblement perpendiculaire à l'assise et une position couchée dans lequel il prolonge latéralement l'assise.

Le véhicule comporte un dispositif de transmission du mouvement de la banquette à l'élément latéral, ledit dispositif de transmission étant agencé pour permettre de façon réversible le mouvement de l'élément latéral entre sa position couchée et sa position relevée lors du déplacement de la banquette vers sa position reculée, et le mouvement de l'élément latéral entre sa position relevée et sa position couchée lors du déplacement de la banquette vers sa position avancée.

Ainsi, lorsque la banquette est dans sa position avancée, l'élément latéral prolonge l'assise de façon à optimiser la largeur de l'assise qui peut ainsi recevoir trois passagers.

D'autres objets et avantages de l'invention apparaîtront au cours de la description qui suit, faite en référence aux dessins annexés, dans lesquels :
- la figure 1 est une représentation schématique en perspective de la banquette en position avancée ;
- la figure 2 est une représentation schématique en perspective de la banquette en position reculée ;

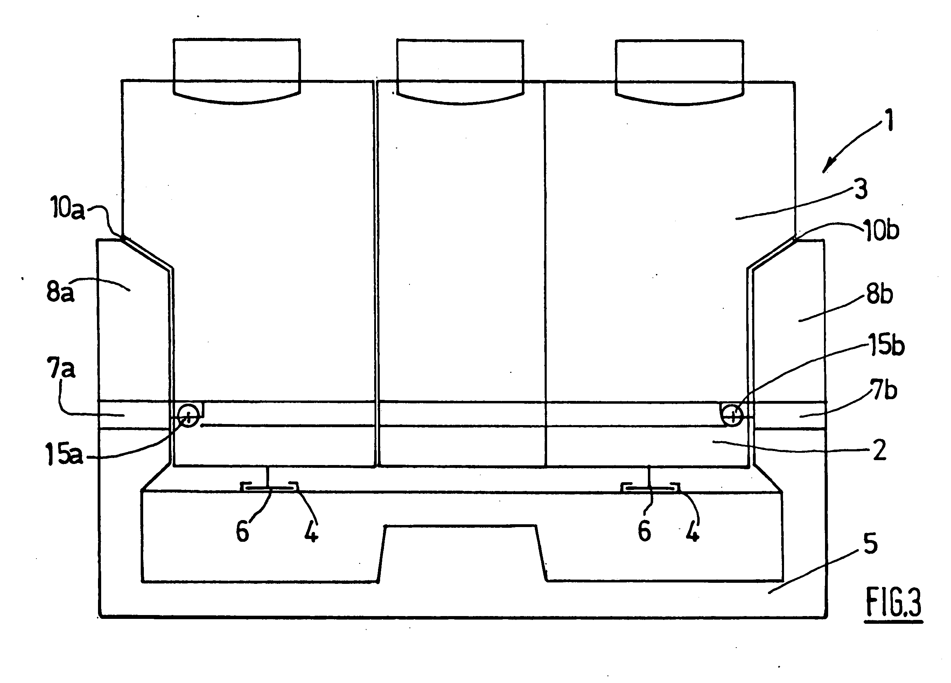

- la figure 3 est une vue avant de la banquette en position avancée ;

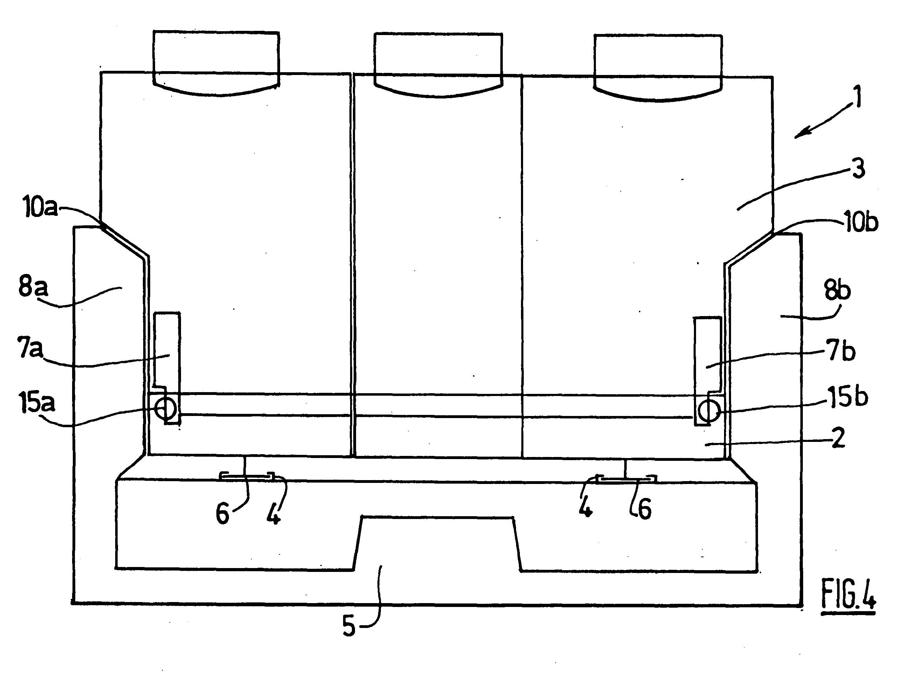

- la figure 4 est une vue avant de la banquette en position reculée ;
- la figure 5 est une vue en perspective représentant le mécanisme de transmission du mouvement de la banquette à l'élément latéral selon un mode de réalisation de l'invention ; et
- la figure 6 est une vue de côté du mécanisme de transmission du mouvement de la figure 5.

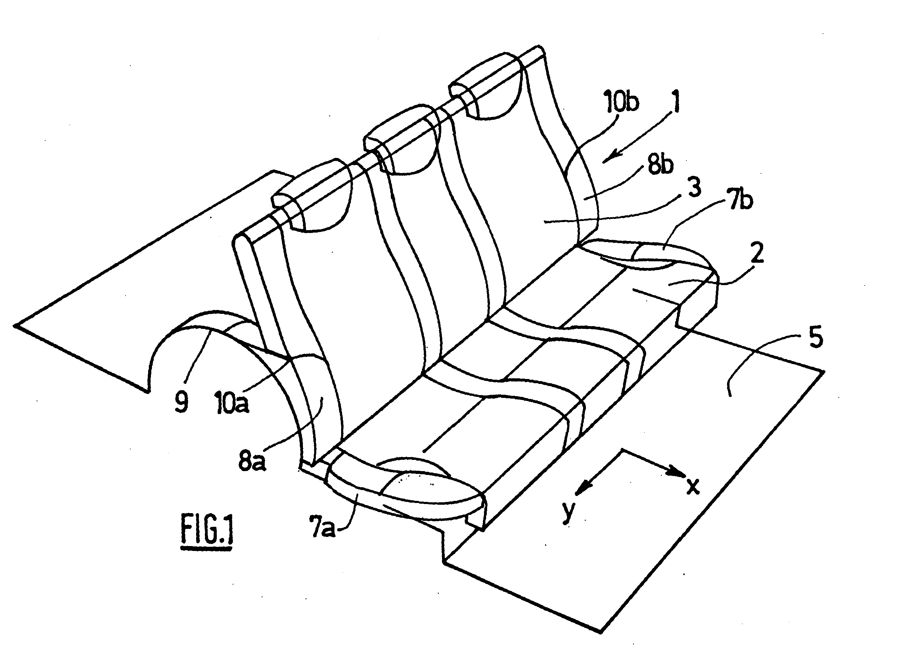

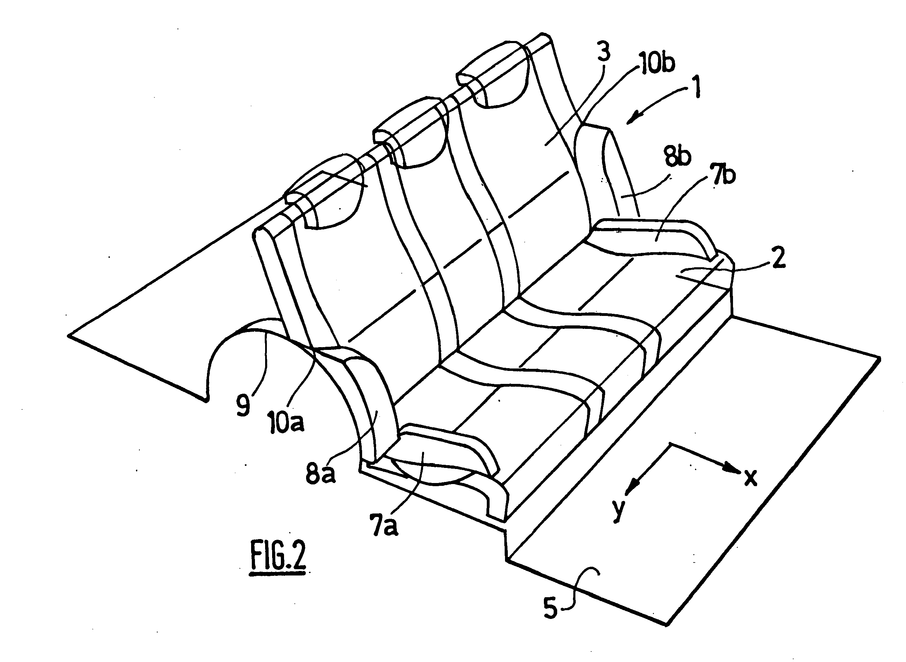

Le véhicule possède une banquette 1 composée d'une assise 2 et d'un dossier 3. La banquette 1 est mobile selon l'axe longitudinal du véhicule (axe x) entre une position avancée (figure 1) et une position reculée (figure 2). A cet effet, le véhicule comporte des rails de guidage 4 disposés sur le plancher 5 et permettant de guider des patins 6 solidaires de la banquette 1. Le déplacement de la banquette 1 permet de disposer au choix d'un espace plus important derrière la banquette 1, pour le coffre par exemple, ou de disposer d'un espace plus important pour les passagers assis sur ladite banquette 1.

Le véhicule comporte en outre des moyens de verrouillage de la banquette 1 permettant de l'immobiliser, par rapport au plancher 5 du véhicule, dans sa position avancée et dans sa position reculée.

Au moins un élément latéral 7a, 7b est monté en rotation sur un bord latéral de l'assise 2 selon un axe 15a, 15b sensiblement parallèle à l'axe longitudinal du véhicule. Avantageusement, le véhicule comporte deux éléments latéraux 7a, 7b disposés de part et d'autre de la banquette 1. Les éléments latéraux 7a, 7b sont mobiles entre une position couchée dans laquelle ils prolongent l'assise 2 et une position relevée dans laquelle ils sont sensiblement perpendiculaires à l'assise 2.

Le véhicule comporte également un dispositif de transmission du mouvement de la banquette 1 aux éléments latéraux 7a, 7b. Ainsi, lorsque l'utilisateur déplace la banquette 1 manuellement ou par des moyens moteurs, le déplacement des éléments latéraux 7a, 7b est effectué de façon synchronisée.

Par conséquent, tel qu'il est illustré sur la figure 1, lorsque la banquette 1 est dans sa position avancée, les éléments latéraux 7a, 7b sont dans leur position couchée et la banquette 1 peut recevoir trois passagers.

Au contraire, tel qu'il est illustré sur la figure 2, lorsque la banquette 1 est dans sa position reculée, les éléments latéraux 7a, 7b sont dans leur position relevée et la banquette 1 ne peut recevoir que deux passagers.

Au moins un dormant 8a, 8b est solidaire du châssis du véhicule au niveau du passage 9 des roues. Avantageusement, le véhicule comprend deux dormants 8a, 8b disposés de part et d'autre de la banquette 1. Le dossier 3 de la banquette possède des logements 10a, 10b agencés pour loger les dormants 8a, 8b. Lorsque la banquette 1 est dans sa position avancée, la surface avant du dormant 8a, 8b se situe sensiblement dans le prolongement du dossier 3. Lorsque la banquette 1 et dans sa position reculée, le dormant 8a, 8b fait saillie devant le dossier 3 de la banquette 1.

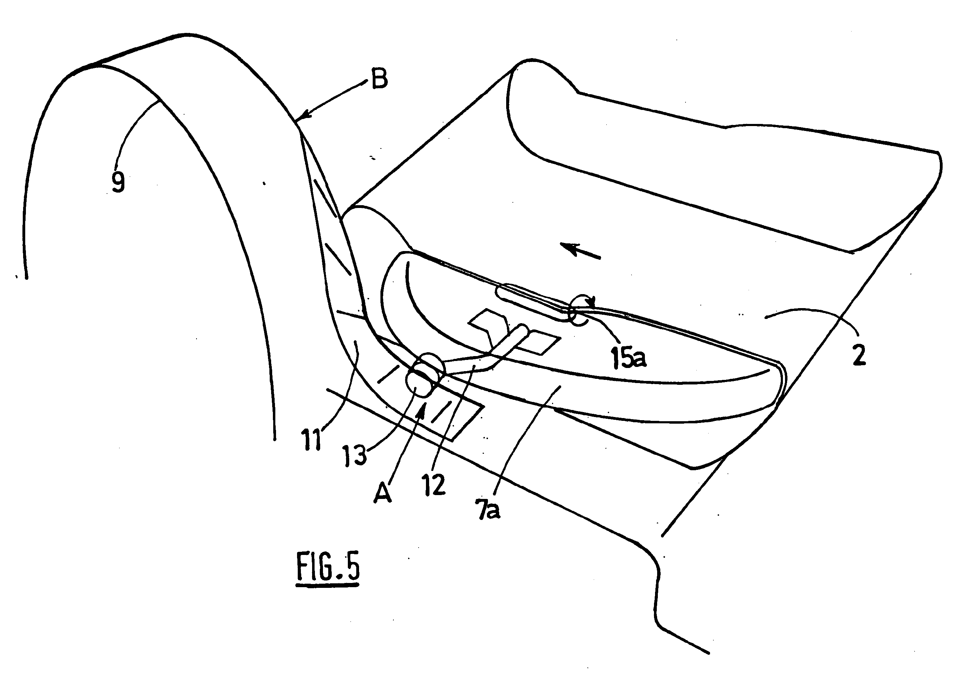

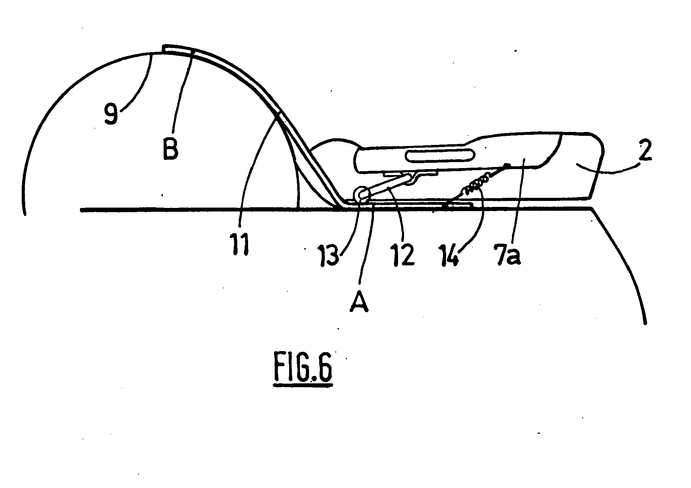

Le dispositif de transmission du mouvement de la banquette 1 aux éléments latéraux 7a, 7b est illustré sur les figures 5 et 6. Le dispositif de transmission comprend une surface de guidage 11 solidaire du châssis du véhicule et un organe de commande solidaire de l'élément latéral 7a, 7b. Lors du déplacement de la banquette 1, l'organe de commande est guidé sur la surface de guidage 11 et entraîne ainsi le déplacement de l'élément latéral 7a, 7b.

L'organe de commande est solidarisé à l'élément latéral au moyen d'un bras de guidage 12 monté fixe sur l'élément latéral 7a, 7b et comprend un patin ou une roulette13 qui est guidé sur la surface de guidage 11.

La surface de guidage 11 possède une forme de portion de ruban torsadé. Avantageusement, cette surface de guidage 11 est disposée sur la carrosserie au voisinage du logement 9 des roues.

Lorsque l'élément latéral 7a, 7b est dans sa position couchée, la roulette 13 se situe dans une première zone (A) et lorsque l'élément latéral 7a, 7b est dans sa position accoudoir, la roulette 12 se situe dans une seconde zone (B). Dans le mode de réalisation représenté, la première zone (A) est sensiblement horizontale et se situe au niveau de l'élément latéral 7a, 7b. Au contraire, la seconde zone (B) est sensiblement verticale et se situe au-dessus de l'élément latéral 7a, 7b. Ainsi, le mouvement de la roulette 13 sur la surface de guidage 11 entraîne un pivotement de l'élément latéral 7a, 7b.

Dans un mode de réalisation, le dispositif de transmission comprend également un moyen de rappel élastique permettant de maintenir en contact l'organe de commande avec la surface de guidage 11. Dans le mode de réalisation représenté, le moyen de rappel et un ressort 14 dont une extrémité est en appui sur l'élément latéral 7a, 7b et une seconde extrémité est en appui sur le châssis du véhicule.

Dans un autre mode de réalisation non représenté, le dispositif de transmission comprend une glissière dont une des parois est formée par la surface de guidage.

Avantageusement, les éléments latéraux 7a, 7b, les dormants 8a, 8b et la banquette 1 sont réalisés dans des matériaux similaires afin d'améliorer l'intégration visuelle des éléments latéraux 7a, 7b et des dormants 8a, 8b dans le véhicule.

## Revendications

1. Véhicule automobile comprenant :
- une banquette (1) composée d'une assise (2) et d'un dossier (3), ladite banquette (1) étant mobile selon l'axe longitudinal du véhicule entre une position avancée et une position reculée ; et
- au moins un élément latéral (7a, 7b) mobile entre une position relevée et une position couchée dans lequel il prolonge latéralement l'assise ;
ledit véhicule comportant un dispositif de transmission du mouvement de la banquette (1) à l'élément latéral (7a, 7b), ledit dispositif de transmission étant agencé pour permettre de façon réversible le mouvement de l'élément latéral (7a, 7b) entre sa position couchée et sa position relevée lors du déplacement de la banquette (1) vers sa position reculée, et le mouvement de l'élément latéral (7a, 7b) entre sa position relevée et sa position couchée lors du déplacement de la banquette (1) vers sa position avancée; ledit véhicule étant **caractérisé en ce que** ledit élément latéral (7a, 7b) est monté en rotation sur l'assise (2), à proximité d'un des bords de ladite assise (2), selon un axe (15a, 15b) sensiblement parallèle à l'axe longitudinal du véhicule, l'élément latéral (7a, 7b) étant sensiblement perpendiculaire à l'assise dans sa position relevée.

2. Véhicule automobile selon la revendication 1, **caractérisé en ce que** le dispositif de transmission du mouvement comprend une surface de guidage (11) solidaire du châssis du véhicule et un organe de commande de l'élément latéral (7a, 7b), ledit organe de commande étant guidé sur la surface de guidage (11).

3. Véhicule automobile selon la revendication 2, **caractérisé en ce que** la surface de guidage (11) possède sensiblement une forme de portion de ruban torsadé.

4. Véhicule automobile selon la revendication 2 ou 3 **caractérisé en ce que** le dispositif de transmission comprend en outre une glissière, la surface de guidage (11) formant une paroi de ladite glissière.

5. Véhicule automobile selon la revendication 2 ou 3, **caractérisé en ce que** le dispositif de transmission comprend en outre un moyen de rappel élastique (14) dont une première extrémité est en appui sur l'élément latéral (7a, 7b) et une seconde extrémité est en appui sur le châssis du véhicule, le moyen de rappel (14) permettant de maintenir en contact l'organe de commande avec la surface de guidage (11).

6. Véhicule automobile selon l'une des revendications 2 à 5, **caractérisé en ce que** l'organe de commande est solidarisée à l'élément latéral (7a, 7b) au moyen d'un bras de guidage (12).

7. Véhicule selon l'une des revendications 2 à 6 **caractérisé en ce que** l'organe de commande comprend un patin ou une roulette (13).

8. Véhicule automobile selon l'une des revendications 1 à 7, **caractérisé en ce qu'**il comporte en outre au moins un dormant (8a, 8b) solidarisé au châssis du véhicule au niveau du passage (9) des roues, le dossier (3) possédant, près d'un bord latéral, un logement (10a) agencé pour loger ledit dormant (8a, 8b), la surface avant du dormant (8a, 8b) étant sensiblement dans le prolongement du dossier (3) lorsque la banquette (1) est dans position avancée.

9. Véhicule automobile selon l'une des revendications 1 à 8, **caractérisé en ce qu'**il comporte deux éléments latéraux (7a, 7b) et deux dormants (8a, 8b) disposés de part et d'autre de la banquette (1).

10. Véhicule automobile selon l'une des revendications 1 à 9, **caractérisé en ce que** les éléments latéraux (7a, 7b), les dormants (8a, 8b) et la banquette (1) sont réalisés dans des matériaux similaires.

11. Véhicule automobile selon l'une des revendications 1 à 10, **caractérisé en ce qu'**il comprend au moins un rail de guidage (4) disposé selon l'axe longitudinal du véhicule et permettant de guider la banquette (1) lors de son déplacement entre sa position avancée et sa position reculée.

12. Véhicule automobile selon l'une des revendications 1 à 11, **caractérisé en ce qu'**il comprend en outre des moyens de verrouillage de la banquette (1) permettant d'immobiliser ladite banquette (1) dans sa position avancée et dans sa position reculée.

## Claims

1. A motor vehicle comprising:
- a seat assembly (1) composed of a seat (2) and a back (3), said seat assembly (1) being movable along the longitudinal axis of the vehicle between a forward position and a backward position; and
- at least one side element (7a, 7b) movable between a raised position and a flat position where it is a lateral extension of the seat;
said vehicle comprising a device for transmitting the motion of the seat assembly (1) to the side element (7a, 7b), said transmission device being so arranged as to allow in a reversible way the motion of the side clement (7a, 7b) between its flat position and its raised position during the displacement of the seat assembly (1) to its backward position, and the motion of the side element (7a, 7b) between its raised position and its flat position during the displacement of the seat assembly (1) to its forward position; said vehicle being **characterised in that** side element (7a, 7b) is rotatably mounted on the seat (2), close to one of the edges of said seat (2), along an axis (15a, 15b) substantially parallel to a longitudinal axis of the vehicle, the side element (7a, 7b) being substantially perpendicular to the seat in its raised position.

2. A motor vehicle according to claim 1, **characterised in that** the motion transmission device comprises a guiding surface (11) made integral with the vehicle frame and a side element (7a, 7b) control member, said control member being guided on the guiding surface (11).

3. A motor vehicle according to claim 2, **characterised in that** the guiding surface (11) substantially has the shape of a twisted ribbon.

4. A motor vehicle according to claim 2 or 3, **characterised in that** the transmission device further comprises a slide, the guiding surface (11) forming a wall of said slide.

5. A motor vehicle according to claim 2 or 3, **characterised in that** the transmission device further comprises an elastic return means (14), a first end of which rests on the side element (7a, 7b) and a second end of which rests on the vehicle frame, said return means (14) making it possible to keep the control member in contact with the guiding surface (11).

6. A motor vehicle according to one of claims 2 to 5, **characterised in that** the control member is made integral with the side element (7a, 7b) through a guiding arm (12).

7. A vehicle according to one of claims 2 to 6, **characterised in that** the control member comprises a skid or a caster (13).

8. A motor vehicle according to one of claims 1 to 7, **characterised in that** it further includes at least a mounting post (8a, 8b) made integral with the vehicle frame at the wheelhouse (9), the back (3) having, close to a side edge, a cavity (10a) arranged to accommodate said mounting post (8a, 8b), the front surface of the mounting post (8a, 8b) becoming substantially the back (3) when the seat assembly (1) is in the forward position.

9. A motor vehicle according of claims 1 to 8, **characterised in that** it comprises two side elements (7a, 7b), and two mounting posts (8a, 8b) positioned on either side of the seat assembly (1).

10. A motor vehicle according to one of claims 1 to 9, **characterised in that** the side elements (7a, 7b), the mounting posts (8a, 8b) and the seat assembly (1) are made of similar materials.

11. A motor vehicle according to one of claims 1 to 10, **characterised in that** it includes at least a guiding rail (4) positioned along the longitudinal axis of the vehicle and making it possible to guide the seat assembly (1) when it is moved between its forward position and its backward position.

12. A motor vehicle according to one of claims 1 to 11, **characterised in that** it further includes seat assembly (1) locking means making it possible to lock said seat assembly (1) in its forward position and in its backward position.

## Patentansprüche

1. Kraftfahrzeug, das folgende Teile umfaßt:
- eine Rücksitzbank (1) bestehend aus einer Sitzfläche (2) und einer Rückenlehne (3), wobei die besagte Rücksitzbank (1) auf der Längsachse des Fahrzeugs zwischen einer vorgeschobenen Position und einer zurückgezogenen Position mobil ist;und
- mindestens ein Seitenelement (7a, 7b), das zwischen einer hochstehenden und einer liegenden Position mobil ist, in der es die Sitzfläche seitlich verlängert;
wobei das besagte Fahrzeug eine Vorrichtung für die Übertragung der Bewegung von der Rücksitzbank (1) zum Seitenelement (7a, 7b) umfaßt, wobei die besagte Vorrichtung für die Übertragung so gestaltet ist, daß sie die Bewegung des Seitenelements (7a, 7b) zwischen seiner liegenden Position und seiner stehenden Position bei der Verschiebung der Rücksitzbank (1) zu ihrer zurückgezogenen Position und die Bewegung des Seitenelements (7a, 7b) zwischen seiner stehenden Position und seiner liegenden Position bei der Verschiebung der Rücksitzbank (1) in ihre vorgeschobene Position auf umkehrbare Weise ermöglicht; Wobei das besagte Fahrzeug **dadurch gekennzeichnet ist, daß** das besagte Seitenelement (7a, 7b) drehbar auf der Sitzfläche (2) montiert ist, und zwar in der Nähe einer der Kanten der besagten Sitzfläche (2) auf einer Achse (15a, 15b), die deutlich parallel zur Längsachse des Fahrzeugs verläuft,
wobei das Seitenelement (7a, 7b) in stehender Position deutlich senkrecht zur Sitzfläche verläuft.

2. Kraftfahrzeug nach Anspruch 1, **dadurch gekennzeichnet, daß** die Vorrichtung zur Übertragung der Bewegung eine mit dem Fahrgestell des Fahrzeugs fest verbundene Führungsfläche (11) und ein Steuerorgan des Seitenelements (7a, 7b) umfaßt, wobei das besagte Steuerorgan auf der Führungsfläche (11) geführt wird.

3. Kraftfahrzeug nach Anspruch 2, **dadurch gekennzeichnet, daß** die Führungsfläche (11) deutlich eine Form eines Abschnitts eines verdrehten Bands besitzt.

4. Kraftfahrzeug nach Anspruch 2 oder 3, **dadurch gekennzeichnet, daß** die Vorrichtung zur Übertragung ferner eine Gleitschiene umfaßt, wobei die Führungsfläche (11) eine Wand der besagten Gleitschiene bildet.

5. Kraftfahrzeug nach Anspruch 2 oder 3, **dadurch gekennzeichnet, daß** die Vorrichtung zur Übertragung ferner ein Mittel für die elastische Rückholung (14) umfaßt, dessen erstes Ende am Seitenelement (7a, 7b) anliegt, und ein zweites Ende auf dem Fahrgestell des Fahrzeugs aufliegt, wobei das Rückholelement (14) ermöglicht, das Steuerorgan in Kontakt mit der Führungsfläche (11) zu halten.

6. Kraftfahrzeug nach einem beliebigen der vorstehenden Ansprüche 2 bis 5, **dadurch gekennzeichnet, daß** das Steuerorgan vermittels eines Führungsarms (12) fest mit dem Seitenelement (7a, 7b) verbunden ist.

7. Kraftfahrzeug nach einem beliebigen der vorstehenden Ansprüche 2 bis 6, **dadurch gekennzeichnet, daß** das Steuerorgan einen Gleitschuh oder ein Röllchen (13) umfaßt.

8. Kraftfahrzeug nach einem beliebigen der vorstehenden Ansprüche 1 bis 7, **dadurch gekennzeichnet, daß** es außerdem mindestens einen Türrahmen (8a, 8b) umfaßt, der fest mit dem Fahrwerk des Fahrzeugs am Radkasten (9) verbunden ist, wobei die Rückenlehne (3) in der Nähe einer Seitenkante eine Aufnahme (10a) besitzt, die so gestaltet ist, daß sie die besagten Rahmen (8a, 8b) aufnimmt, wobei die Vorderfläche des Rahmens (8a, 8b) deutlich in der Verlängerung der Rückenlehne (3) liegt, wenn die Rücksitzbank (1) in ihrer vorgeschobenen Position ist.

9. Kraftfahrzeug nach einem beliebigen der vorstehenden Ansprüche 1 bis 8, **dadurch gekennzeichnet, daß** es zwei Seitenelemente (7a, 7b) und zwei Türrahmen (8a, 8b) Umfaßt, die zu beiden Seiten der Rücksitzbank (1) angeordnet sind.

10. Kraftfahrzeug nach einem beliebigen der vorstehenden Ansprüche 1 bis 9, **dadurch gekennzeichnet, daß** die Seitenelemente (7a, 7b), die Türrahmen (8a, 8b) und die Rücksitzbank (1) aus ähnlichen Werkstoffen ausgeführt sind.

11. Kraftfahrzeug nach einem beliebigen der vorstehenden Ansprüche 1 bis 10, **dadurch gekennzeichnet, daß** es mindestens eine Führungsschiene (4) umfaßt, die auf der Längsachse des Fahrzeugs angeordnet ist und ermöglicht, die Rücksitzbank (1) bei ihrer Verschiebung zwischen ihrer vorgeschobenen Position und ihre zurückgezogenen Position zu führen.

12. Kraftfahrzeug nach einem beliebigen der vorstehenden Ansprüche 1 bis 11, **dadurch gekennzeichnet, daß** es außerdem Mittel zur Verriegelung der Rücksitzbank (1) umfaßt, mit denen die besagte Rücksitzbank (1) in ihrer vorgeschobene und in ihrer zurückgezogenen Position gesperrt werden kann.
